# EUROPEAN PATENT APPLICATION

(11) **EP 4 818 881 A1**
(43) Date of publication of application: **07.10.2026**
(21) Application number: 25206302.9
(22) Date of filing: 02.10.2025
(51) Int. Cl.: G06F 3/12, G03G 15/20, G03G 15/00

(54) **INFORMATION PROCESSING SYSTEM, INFORMATION PROCESSING PROGRAM, AND INFORMATION PROCESSING METHOD**

(30) Priority: 03.04.2025 JP 2025062073
(71) Applicant: FUJIFILM Business Innovation Corp., Minato-ku Tokyo (JP)
(72) Inventor: KOMAZAWA, Hisao, Yokohama-shi, Kanagawa (JP)
(74) Representative: Becker Kurig & Partner Patentanwälte mbB

(57) **Abstract**

An information processing system includes a processor configured to: acquire information on paper printed in a series of processes; specify a reference fixing temperature for each of plural paper discharge sections in a case where the paper printed in the series of processes is discharged to the plural paper discharge sections and a variation among fixing temperatures set for the paper discharged to each of the plural paper discharge sections as fixing temperatures for fixing an image to the paper is within a predetermined range; and determine a printing order of the paper printed in the series of processes such that the paper is printed in order from a paper discharge section with a lowest reference fixing temperature without changing an arrangement order of the paper discharged to each of the paper discharge sections.

## Description

### BACKGROUND OF THE INVENTION

### (i) Field of the Invention

The technology of the present disclosure relates to an information processing system, an information processing program, and an information processing method.

### (ii) Description of Related Art

JP2020-113115A discloses an information processing apparatus including a job acquisition unit that acquires a plurality of printing jobs in which image formation using different types of paper is mixed, an analysis unit that specifies at least one of a temperature condition that is a temperature of a fixing unit or a drying unit during execution of the printing job or paper information for each of the printing jobs, a rearrangement unit that rearranges the plurality of printing jobs such that jobs having the same temperature condition or the same paper information are consecutively executed, and a job output unit that outputs the printing jobs to an image forming apparatus in a rearranged order.

JP2016-105145A discloses an image forming apparatus including an image forming unit that performs an image forming operation of forming a toner image on fed paper, a heating roller including a heating heater, a fixing unit that performs a fixing process of fixing the toner image to the paper by nipping the paper with a pressure roller, a feeding unit that includes a plurality of feeding mechanisms accommodating the paper and feeds the paper to the image forming unit, a fixing temperature control unit that controls temperature of the fixing unit such that a fixing temperature in the fixing process is a target temperature determined for each paper type, and a target temperature management unit that, in a case where the paper fed to the image forming unit by the feeding unit is switched from the paper with a high target temperature to the paper with a low target temperature during continuous printing by the image forming unit, lowers the target temperature during the fixing process of the paper with the high target temperature stepwise to the low target temperature within a temperature range in which fixing to the paper with the high target temperature can be performed.

JP2010-224206A discloses a printing apparatus that, in a case of performing a printing process based on a printing job in which a printing process is performed on a plurality of types of printing paper transferred from a host apparatus, performs the printing process by making temperature settings of a fixing device different in accordance with the type of the printing paper designated to be used, the printing apparatus including: a start state storage unit that stores start state information at the start of the printing job; a fixing temperature control unit that sequentially switches a fixing setting temperature in accordance with the designation of the type of printing paper designated in the printing data during a continuous printing process in the identical printing job; and a fixing temperature setting unit that sets a control temperature of the fixing device based on the start state information stored in the start state storage unit after the end of the continuous printing.

### SUMMARY OF THE INVENTION

Some image forming apparatuses are equipped with a plurality of paper discharge sections. In a case where the paper printed in the series of processes is discharged to the plurality of paper discharge sections, a user expects that a printed material is output in order intended by the user in each of the paper discharge sections in a case of receiving the printed material. For example, the user expects that the printed material is output in a page order in the paper discharge section.

A fixing temperature for fixing an image to the paper in the image forming apparatus may vary depending on the type of the paper. In a case where a plurality of sheets of paper are printed in a state where different types of paper with different fixing temperatures are mixed, it takes time to adjust the temperature of the fixing unit up and down in accordance with the fixing temperature of each type of the paper. On the other hand, in a case where the paper printed in the series of processes is printed in ascending order of the fixing temperature, the time for lowering the temperature of the fixing unit is omitted, and thus the productivity is improved. However, in a case where the paper is rearranged and printed in ascending order of the fixing temperature without any particular restrictions, the printed material may not be output in order expected by the user in the paper discharge section in a case where the user receives the printed material, and the user convenience is decreased.

An object of the present disclosure is to prevent a decrease in user convenience that occurs in a case where a printing order that takes a fixing temperature into account is adopted, as compared to a case where paper is printed in ascending order of a fixing temperature without any particular restrictions.

According to a first aspect of the present disclosure, there is provided an information processing system including: a processor configured to: acquire information on paper printed in a series of processes; specify a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and determine a printing order of the paper printed in the series of processes such that the paper is printed in order from a paper discharge section with a lowest reference fixing temperature without changing an arrangement order of the paper discharged to each of the paper discharge sections.

According to a second aspect of the present disclosure, in the information processing system according to the first aspect, the processor may be configured to: in a case where a type of the paper discharged to each of the paper discharge sections is one type as a case where the variation among the fixing temperatures is within the predetermined range, specify the reference fixing temperature.

According to a third aspect of the present disclosure, in the information processing system according to the first aspect, the processor may be configured to: refer to a table that groups types of the paper of which a fixing temperature difference is within a predetermined range and specify the reference fixing temperature in a case where the types of the paper discharged to each of the paper discharge sections are only the types belonging to the same group as a case where the variation among the fixing temperatures is within the predetermined range.

According to a fourth aspect of the present disclosure, in the information processing system according to the first aspect, the processor may be configured to: set the predetermined range using a fixing temperature of the paper that is discharged first in the paper discharged to each of the paper discharge sections as a median value.

According to a fifth aspect of the present disclosure, in the information processing system according to any one of the first to fourth aspects, the series of processes may include printing of a plurality of sheets of paper for a plurality of copies of a document, and the processor may be configured to: in a case where there is no sufficient feeding paper to print all of the plurality of copies of the document, determine the printing order such that only the paper for copies for which the feeding paper is sufficient among the plurality of copies is printed.

According to a sixth aspect of the present disclosure, in the information processing system according to the fifth aspect, the processor may be configured to: in a case where there are copies for which the feeding paper is not sufficient among the plurality of copies, display a screen prompting a user to replenish the feeding paper.

According to a seventh aspect of the present disclosure, in the information processing system according to the sixth aspect, the processor may be configured to: in a case where the feeding paper is replenished and printing is resumed, determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections.

According to an eighth aspect of the present disclosure, in the information processing system according to any one of the first to seventh aspects, the processor may be configured to: receive selection of whether or not to enable a function of determining the printing order such that printing is performed in order from the paper discharge section with the lowest reference fixing temperature without changing the arrangement order of the paper discharged to each of the paper discharge sections.

According to a ninth aspect of the present disclosure, in the information processing system according to the fifth aspect, the processor may further be configured to: in a case where the feeding paper is not sufficient to print all of the plurality of copies of the document, receive selection of whether or not to enable a function of determining the printing order such that only the paper for the copies for which the feeding paper is sufficient among the plurality of copies is printed.

According to a tenth aspect of the present disclosure, there is provided an information processing program causing a computer to execute a process including: acquiring information on paper printed in a series of processes; specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and determining a printing order of the paper printed in the series of processes such that the paper is printed in order from a paper discharge section with a lowest reference fixing temperature without changing an arrangement order of the paper discharged to each of the paper discharge sections.

According to an eleventh aspect of the present disclosure, there is provided an information processing method including: acquiring information on paper printed in a series of processes; specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and determining a printing order of the paper printed in the series of processes such that the paper is printed in order from a paper discharge section with a lowest reference fixing temperature without changing an arrangement order of the paper discharged to each of the paper discharge sections.

With the information processing system according to the first aspect of the present disclosure, the information processing program according to the tenth aspect of the present disclosure, or the information processing method according to the eleventh aspect of the present disclosure, the decrease in the user convenience that occurs in a case where the printing order that takes the fixing temperature into account is adopted may be prevented, as compared to a case where the paper is printed in ascending order of the fixing temperature without any particular restrictions.

With the information processing system according to the second aspect of the present disclosure, the printing order that takes the fixing temperature into account may be determined without changing the arrangement order of the same type of the paper that is discharged to each of the paper discharge sections and on which the fixing process is executable at the same temperature.

With the information processing system according to the third aspect of the present disclosure, the printing order that takes the fixing temperature into account may be determined without changing the arrangement order of the type of the paper that is discharged to each of the paper discharge sections and on which the fixing process is executable at the same temperature.

With the information processing system according to the fourth aspect of the present disclosure, the printing order that takes the fixing temperature into account may be determined without changing the arrangement order of the paper that is discharged to each of the paper discharge sections and on which the fixing process is executable at the same temperature as the temperature of the paper discharged first.

With the information processing system according to the fifth aspect of the present disclosure, in a case where the feeding paper is not sufficient, the printing order that takes the fixing temperature into account and in which the paper for the same copies is discharged in each of the plurality of paper discharge sections may be determined.

With the information processing system according to the sixth aspect of the present disclosure, the replenishment of the feeding paper for enabling printing of the paper for the same copies as the copies not printable in each of the plurality of paper discharge sections may be prompted.

With the information processing system according to the seventh aspect of the present disclosure, in a case of printing the paper for the same copies as the copies not printable in each of the plurality of paper discharge sections, the printing order that takes the fixing temperature into account may be determined without changing the arrangement order of the paper discharged to each of the paper discharge sections.

With the information processing system according to the eighth aspect of the present disclosure, the decrease in the user convenience may be prevented as compared to a case where the selection of whether or not to enable a function of changing the printing order is not received.

With the information processing system according to the ninth aspect of the present disclosure, the user convenience may be improved as compared to a case where the selection of whether or not to enable a function of ensuring that the paper is discharged by units of copies is not received.

### BRIEF DESCRIPTION OF THE DRAWINGS

Exemplary embodiment(s) of the present invention will be described in detail based on the following figures, wherein:
FIG. 1 shows an example of a schematic configuration of a printed material providing system 100 according to an exemplary embodiment of the technology of the present disclosure;
FIG. 2 shows an example of a hardware configuration of an information processing system 110 according to a first exemplary embodiment;
FIG. 3 shows an example of a functional configuration of the information processing system 110 according to the first exemplary embodiment;
FIG. 4 shows an example of a flow of information processing executed by the information processing system 110 according to the first exemplary embodiment;
FIG. 5 shows an example of screen display in a case where selection of whether or not to enable a function of determining a printing order that takes a fixing temperature into account is received;
FIG. 6 shows a table 600 showing an example of information on paper printed in a series of processes;
FIG. 7 shows a table 700 showing an example of paper discharged to each of a plurality of paper discharge sections;
FIG. 8 shows a table 800 showing an example of the printing order of the paper printed in the series of processes;
FIG. 9 shows an example of a fixing process step in a case where printing is performed in the printing order that takes the fixing temperature into account, together with a comparative example;
FIG. 10 shows an example of a flow of information processing executed by the information processing system 110 according to a second exemplary embodiment;
FIG. 11 shows an example of a table that groups types of paper of which a fixing temperature difference is within a predetermined range;
FIG. 12 shows an example of a flow of information processing executed by the information processing system 110 according to a third exemplary embodiment;
FIG. 13 shows an example of a flow of information processing executed by the information processing system 110 according to a fourth exemplary embodiment;
FIG. 14 shows an example of screen display in a case of receiving selection of whether or not to enable a function of determining the printing order such that, in a case where feeding paper is not sufficient to print all a plurality of copies of a document, only the paper for copies for which the feeding paper is sufficient among the plurality of copies is printed;
FIG. 15 shows an example of a case where the series of processes includes printing of a plurality of sheets of paper for the plurality of copies of the document, and the feeding paper is not sufficient to print all of the plurality of copies of the document;
FIG. 16 shows an example of the printing order determined for the paper for copies for which the feeding paper is sufficient and the paper for copies not printable due to the insufficient feeding paper; and
FIG. 17 shows an example of screen display prompting a user to replenish the feeding paper.

### DETAILED DESCRIPTION OF THE INVENTION

Hereinafter, an example of exemplary embodiments of the technology of the present disclosure will be described with reference to the accompanying drawings. In each drawing, the identical reference numerals are given to the identical or equivalent components and parts. Further, the dimensional ratio in the drawings may be exaggerated for convenience of description, and may be different from the actual ratio.

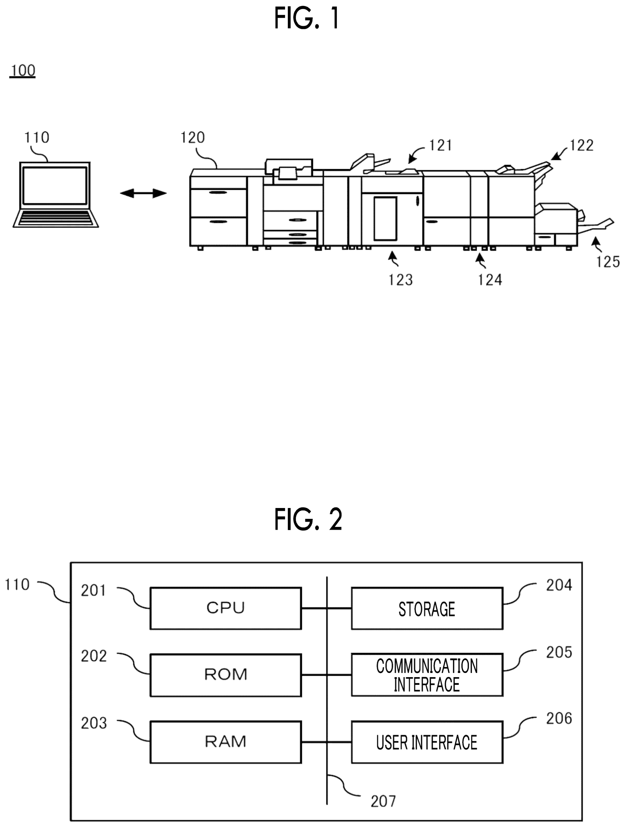

A printed material providing system 100 according to the exemplary embodiment of the technology of the present disclosure will be described. Here, FIG. 1 is referred to.

FIG. 1 shows an example of a schematic configuration of the printed material providing system 100 according to the exemplary embodiment of the technology of the present disclosure. The printed material providing system 100 includes an information processing system 110 such as a computer, and an image forming apparatus 120 including a plurality of paper discharge sections. The information processing system 110 communicates with the image forming apparatus 120. The image forming apparatus 120 may be, for example, a multifunction device that combines the functions of a copier, printer, image scanner, and facsimile machine.

In the printed material providing system 100, the information processing system 110 may control printing in the image forming apparatus 120 by receiving an input of a job and outputting a printing instruction corresponding to the received job. The image forming apparatus 120 prints paper in accordance with the printing instruction and provides a printed material to a user in some or all of the plurality of paper discharge sections. The "job" referred to here represents a unit of a printing process. For example, one job represents printing data in a case of printing one file. The number of pages included in one file is arbitrary, and is one page or more. The paper printed in a series of processes may refer to paper printed by one job or may refer to paper continuously printed by a plurality of jobs.

The job received by the information processing system 110 may include discharge destination information indicating which printing page of the printing data is output to which paper discharge section. The image forming apparatus 120 may output the printed material to the paper discharge section based on the discharge destination information.

In the present example, the image forming apparatus 120 includes five paper discharge sections 121 to 125. The paper discharge section is a discharge destination to which the printed material is discharged and is a place on which the printed material printed in the series of processes is stacked and then provided to the user. For example, the paper discharge section may be a discharge tray. The image forming apparatus 120 can handle various jobs by including the paper discharge sections having different uses.

For example, the paper discharge section 121 is a top tray for discharging special sheets such as a sample and a billing sheet. The paper discharge section 122 is a finisher tray for discharging a stapled or punched sheet. The paper discharge section 123 is a stacker tray for discharging a large amount of unprocessed sheets. The paper discharge section 124 is a folder tray for discharging a sheet tri-folded. The paper discharge section 125 is a booklet tray for discharging a center-folded or center-stitched sheet.

In addition, the job received by the information processing system 110 may include information indicating which type of the paper is used for printing which printing page in the printing data. The type of the paper may be related to a temperature setting of a fixing unit.

The image forming apparatus 120 transfers a toner, that is, an image to the paper, and then applies heat in the fixing unit in the image forming apparatus 120 to fix the image. For example, the temperature of the fixing unit that is preferable for fixing the image may vary depending on the type of the paper. The type of the paper refers to a type of the paper that is distinguished by a thickness of the paper, the presence or absence of coating, a material of the paper, and the like. Since thick paper is less likely to be heated than plain paper, for example, it is often desired to perform the fixing process at a higher temperature. In this way, the fixing temperature that is considered to be appropriate is predetermined and set for the type of the paper, and the temperature of the fixing unit is adjusted in accordance with the fixing temperature. The fixing temperature set for the type of the paper may be one value. In a case where the fixing temperature has an allowable range, the fixing temperature described in the present specification may refer to a representative value within the range.

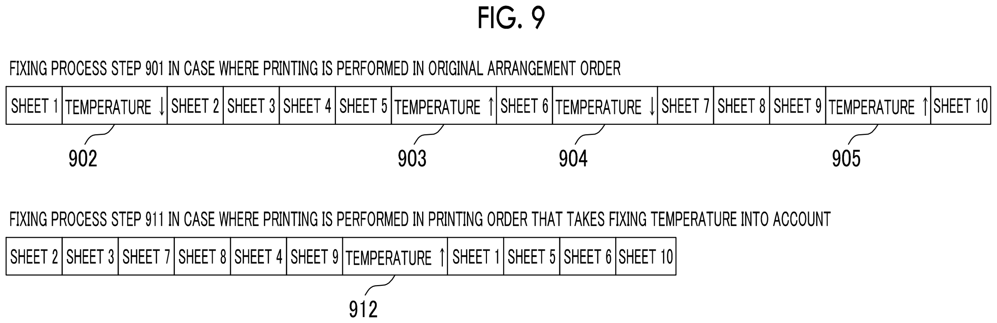

In a case where the temperature of the fixing unit is not adapted to the fixing temperature of the type of the paper to be printed, the image forming apparatus 120 adjusts the temperature of the fixing unit to the fixing temperature and then starts printing. For example, in a case where the paper with the fixing temperature of 180°C is printed and then the paper with the fixing temperature of 160°C is printed, the image forming apparatus 120 lowers the temperature of the fixing unit from 180°C to 160°C and then starts printing the paper with the fixing temperature of 160°C. Therefore, in a case where a job in which different types of the paper with different fixing temperatures are mixed is printed, it takes time to adjust the temperature of the fixing unit up and down in accordance with the fixing temperature of each type of the paper. For example, it takes time for temperature adjustment processs 902, 903, 904, and 905 of FIG. 9 described later.

Although the specific process will be described later, in the information processing system 110 according to the technology of the present disclosure, the printing order of the paper that takes the fixing temperature into account is determined without changing the arrangement order of the paper discharged to each of the paper discharge sections included in the image forming apparatus 120. This is because the printed material is expected to be output in order in which the printed material is recognized in a case where the user inputs the printing instruction, for example, in order of the page number in each of the paper discharge sections. In a case where the printing order is determined in the information processing system 110, the printing order may be rearranged by units of sheets.

Although, in the present example, the information processing system 110 and the image forming apparatus 120 are described as being configured separately, the information processing system 110 may be configured integrally with the image forming apparatus 120.

### [First Exemplary Embodiment]

A hardware configuration of the information processing system 110 according to a first exemplary embodiment will be described. Here, FIG. 2 is referred to.

FIG. 2 shows an example of the hardware configuration of the information processing system 110 according to the first exemplary embodiment. The information processing system 110 includes a CPU 201, a read only memory (ROM) 202, a random access memory (RAM) 203, a storage 204, a communication interface 205, and a user interface 206. The above configurations are communicably connected to each other via a bus 207.

The CPU 201 executes various programs and controls the respective configurations. The ROM 202 stores various programs and various data. The RAM 203 temporarily stores the program or the data as a working area. The storage 204 is configured by a hard disk drive (HDD) or a solid state drive (SSD), and stores various programs including an operating system and various data.

In the information processing system 110 according to the present exemplary embodiment, an information processing program is stored in the ROM 202 or the storage 204. The CPU 201 reads out the information processing program from the ROM 202 or the storage 204 and executes the information processing program using the RAM 203 as the working area to control the respective configurations and execute various types of arithmetic processing in accordance with the information processing program.

The communication interface 205 is an interface for the information processing system 110 to communicate with another apparatus. The user interface 206 is an input/output interface for the information processing system 110 to exchange information with the user. The user interface 206 may include a touch panel, a keyboard, a microphone, or the like as an input device, and may include a monitor, a speaker, or the like as an output device. The user interface 206 may be an input/output device for receiving selection of whether or not to enable a function, which will be described later.

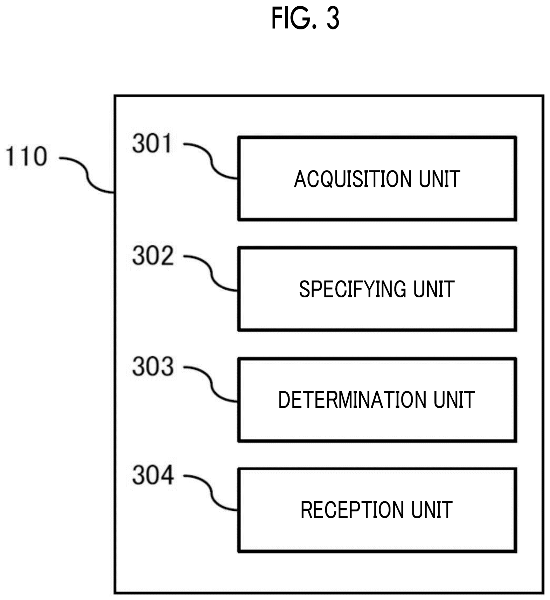

Next, a functional configuration of the information processing system 110 according to the first exemplary embodiment will be described. Here, FIG. 3 is referred to.

FIG. 3 shows an example of the functional configuration of the information processing system 110 according to the first exemplary embodiment. The information processing system 110 includes an acquisition unit 301, a specifying unit 302, a determination unit 303, and a reception unit 304 as the functional configurations. These functional configurations are implemented by the CPU 201 reading out the information processing program from the ROM 202 or the storage 204, loading the information processing program into the RAM 203, and executing the information processing program.

The acquisition unit 301 acquires information on the paper printed in the series of processes. The information on the paper printed in the series of processes may be information indicating the type and the number of sheets of the paper used for the number of prints or the number of copies included in the printing data received as the job, and may also include information on which type of the paper is scheduled to be discharged to which paper discharge section.

In a case where the paper printed in the series of processes is discharged to the plurality of paper discharge sections, and a variation among the fixing temperatures set for the paper discharged to each of the plurality of paper discharge sections as the fixing temperatures for fixing the image to the paper is within a predetermined range, the specifying unit 302 specifies a reference fixing temperature for each of the plurality of paper discharge sections.

The predetermined range of the variation among the fixing temperatures is set to satisfy the requirement in which the fixing process can be executed on the paper at the same temperature. That is, in a case where the variation among the fixing temperatures set for the paper discharged to the plurality of paper discharge sections is within the predetermined range, the paper scheduled to be discharged to each of the paper discharge sections is paper on which the fixing process can be executed at the same temperature.

In such a case, in a case where a batch of the paper scheduled to be discharged to each of the paper discharge sections is continuously printed, it is not necessary to adjust the temperature of the fixing unit in the image forming apparatus 120 while the paper scheduled to be discharged to one paper discharge section is being printed. In this case, since a batch of the printed paper is subjected to the fixing process at the same temperature, it is not necessary to change the printing order of the paper discharged to each paper discharge section from the arrangement order in a case where the user inputs the printing instruction. In a case where the arrangement order of the paper discharged to each of the paper discharge sections can be maintained, the user can receive the printed material stacked in the order in each paper discharge section expected in a case where the printing instruction is input.

Here, the reference fixing temperature is used as the fixing temperature that represents each paper discharge section, and is a value that serves as a reference in a case where the determination unit 303 determines the printing order. Data in which the type of the paper and the fixing temperature suited for the type of the paper are associated with each other may be stored in the storage 204 or the like and held in the information processing system 110.

In a case where such data is referred to and there is one fixing temperature corresponding to the type of the paper scheduled to be discharged to one paper discharge section, the fixing temperature may be specified as the reference fixing temperature for the paper discharge section. In a case where such data is referred to and there is not one fixing temperature corresponding to the type of the paper scheduled to be discharged to one paper discharge section, any value representative of a plurality of fixing temperatures may be specified as the reference fixing temperature for the paper discharge section. As the representative value, a highest value, an average value, or a lowest value of the fixing temperatures corresponding to the type of the paper scheduled to be discharged to the paper discharge section may be set.

Here, the concept that the variation among the fixing temperatures is within the predetermined range includes a concept that the type of the paper discharged to each of the paper discharge sections is one type. In addition, the concept that the variation among the fixing temperatures is within the predetermined range includes a concept that the types of the paper discharged to each of the paper discharge sections are only the types belonging to the same group in a table that groups the types of the paper of which the fixing temperature difference is within the predetermined range.

The determination unit 303 determines the printing order of the paper printed in the series of processes such that printing is performed in order from the paper discharge section with a low reference fixing temperature without changing the arrangement order of the paper discharged to each of the paper discharge sections.

Here, the concept that the arrangement order of the paper discharged to each of the paper discharge sections is not changed includes a concept that the arrangement order of the printing data sorted for each paper discharge section is maintained in a case where the arrangement order of the printing data sorted for each paper discharge section in a case where the printing instruction is received. The arrangement order of the printing data in a case where the printing instruction is received may be, for example, in page number order in one file, in order in which the job is received, or the like.

Further, here, the concept that printing is performed in order from the paper discharge section with the lowest reference fixing temperature includes a concept that, in a case of comparing the reference fixing temperatures, which are values that represent each paper discharge section, a batch of the paper discharged to the paper discharge section with the lowest reference fixing temperature is continuously printed, and then a batch of the paper discharged to the paper discharge section with the next lowest reference fixing temperature is continuously printed.

As a result, the printing process can be executed by stepwise raising the temperature of the fixing unit in the image forming apparatus 120. In general, it takes longer time to lower the temperature of the fixing unit than to raise the temperature of the fixing unit, so that it is possible to improve productivity by eliminating the need to lower the temperature of the fixing unit. That is, the determination unit 303 can determine the printing order that takes the fixing temperature into account by changing, by units of the paper discharge sections, the arrangement order of the printing data in a case where the printing instruction is received.

The reception unit 304 may receive selection of whether or not to enable a function of determining the printing order such that printing is performed in order from the paper discharge section with the low reference fixing temperature without changing the arrangement order of the paper discharged to each of the paper discharge sections.

It is conceivable that the printing order is changed from the printing order expected by the user in a case of giving the printing instruction, by enabling a function of performing printing in order from the paper discharge section with the low reference fixing temperature without changing the arrangement order of the paper discharged to each of the paper discharge sections. Since the user may want to maintain the printing order expected in a case where the user gives the printing instruction, in a case where the reception unit 304 receives such selection, the user convenience can be improved.

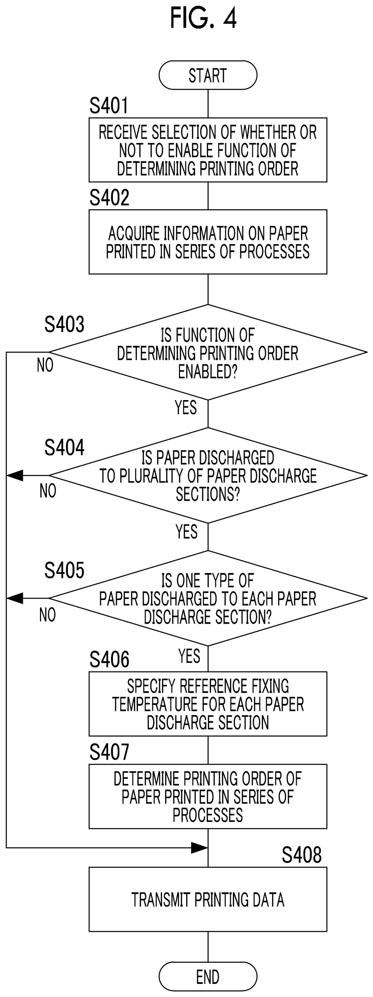

Next, a flow of information processing executed by the information processing system 110 according to the first exemplary embodiment will be described. Here, FIG. 4 is referred to.

FIG. 4 shows an example of the flow of the information processing executed by the information processing system 110 according to the first exemplary embodiment. The present flow is executed by the CPU 201 reading out the information processing program from the ROM 202 or the storage 204, loading the information processing program into the RAM 203, and executing the information processing program.

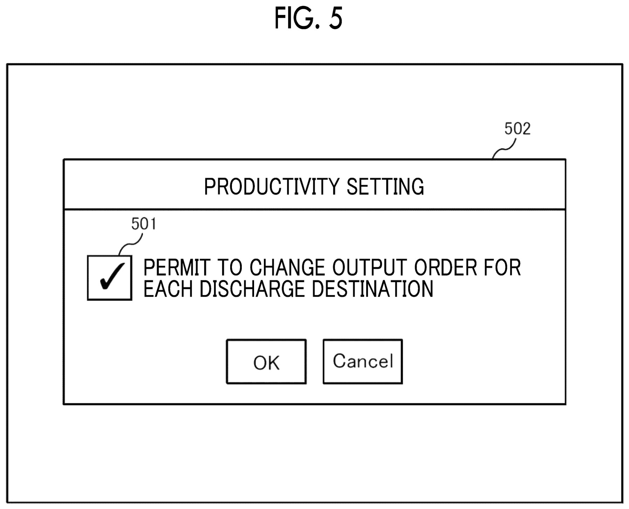

In step S401, the CPU 201 functions as the reception unit 304 to receive the selection of whether or not to enable the function of determining the printing order such that printing is performed in order from the paper discharge section with the low reference fixing temperature without changing the arrangement order of the paper discharged to each of the plurality of paper discharge sections. For example, the selection of the user may be accepted by checking a check box 501 shown in FIG. 5 described later.

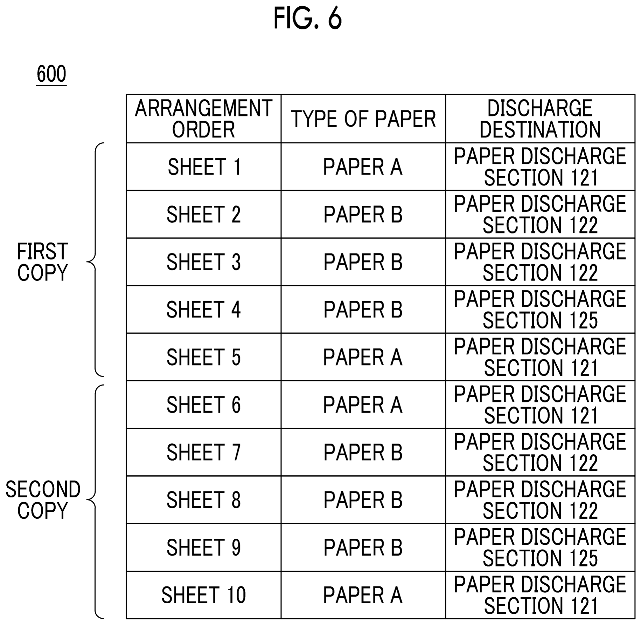

Next, in step S402, the CPU 201 functions as the acquisition unit 301 to acquire the information on the paper printed in the series of processes. For example, the CPU 201 acquires the printing job, and acquires the information on the type and the number of sheets of paper used for the number of prints or the number of copies, and on which type of the paper is scheduled to be discharged to which paper discharge section, as in a table 600 shown in FIG. 6 described later.

Next, in step S403, the CPU 201 functions as the reception unit 304 to determine whether or not to enable the above-described function of determining of the printing order that takes the fixing temperature into account.

In a case where it is determined that the above-described function of determining of the printing order is enabled, the CPU 201 advances the process to step S404. In a case where it is determined that the above-described function of determining of the printing order is not enabled, the CPU 201 advances the process to step S408.

In step S404, the CPU 201 functions as the specifying unit 302 to determine whether or not the paper printed in the series of processes is discharged to the plurality of paper discharge sections. For example, sheets 1 to 10 shown in FIG. 6, which will be described later, are discharged to the plurality of paper discharge sections 121, 122, and 125.

In a case where it is determined that the paper printed in the series of processes is discharged to the plurality of paper discharge sections, the CPU 201 advances the process to step S405. In a case where it is determined that the paper printed in the series of processes is not discharged to the plurality of paper discharge sections, the CPU 201 advances the process to step S408.

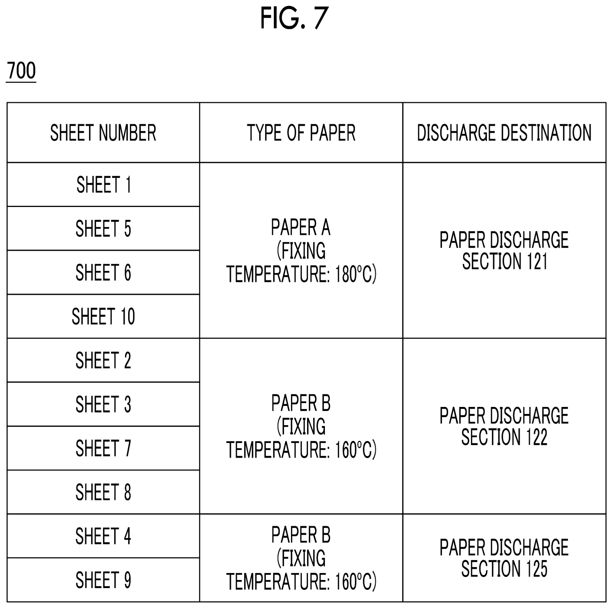

In step S405, the CPU 201 functions as the specifying unit 302 to determine whether or not the type of the paper discharged to each of the paper discharge sections is one type. For example, the type of the paper discharged to each of the paper discharge sections 121, 122, and 125 shown in FIG. 7, which will be described later, is one type. Determining whether or not the type of the paper discharged to each of the paper discharge sections is one type is one aspect of determining whether or not the variation among the fixing temperatures set for the paper discharged to each of the plurality of paper discharge sections is within the predetermined range.

In a case where it is determined that the type of the paper discharged to each of the paper discharge sections is one type, the CPU 201 advances the process to step S406. In a case where it is determined that the type of the paper discharged to each of the paper discharge sections is not one type, the CPU 201 advances the process to step S408.

In step S406, the CPU 201 functions as the specifying unit 302 to specify the reference fixing temperature for each of the plurality of paper discharge sections. For example, 180°C, which is the fixing temperature of paper A discharged to the paper discharge section 121 shown in FIG. 7 described later, may be specified as the reference fixing temperature of the paper discharge section 121. The CPU 201 may refer to, for example, data in which the type of the paper and the fixing temperature suited for the type of the paper are associated with each other, and specify the fixing temperature corresponding to the type of the paper scheduled to be discharged to each paper discharge section as the reference fixing temperature that represents each paper discharge section.

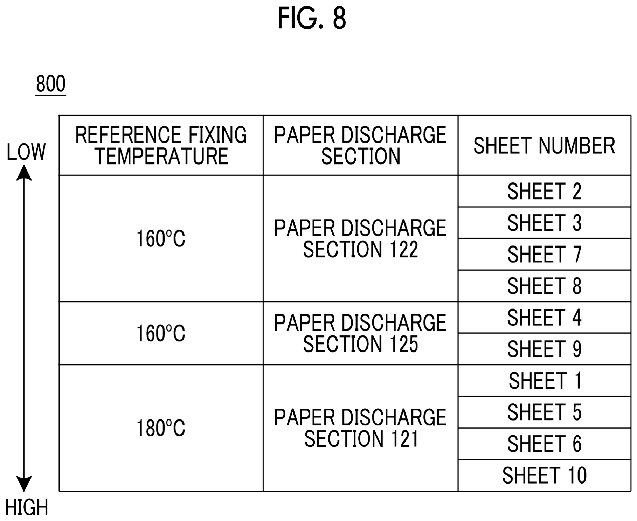

In step S407, the CPU 201 functions as the determination unit 303 to determine the printing order of the paper printed in the series of processes such that printing is performed in order from the paper discharge section with the low reference fixing temperature without changing the arrangement order of the paper discharged to each of the paper discharge sections. For example, the printing order shown in FIG. 8 described later may be determined. The printing order means a page order in which printing is executed. In a case where the image forming apparatus 120 executes printing in the printing order determined in this way, the order in which the printed material discharged to each of the paper discharge sections is stacked is the order expected by the user at the time of printing instruction input.

In step S408, the CPU 201 functions as the determination unit 303 to transmit the printing data to the image forming apparatus 120. The CPU 201 may sequentially transmit the printing data to the image forming apparatus 120 by units of sheets based on the original arrangement order or the printing order determined in step S407. Here, the process ends.

In a case where the printing process is executed based on the printing order determined in step S407, the image forming apparatus 120 can execute the printing process in ascending order of the fixing temperature, so that the temperature in the fixing unit can be raised stepwise. For example, the image forming apparatus 120 can execute the printing process including the fixing process by executing a temperature adjustment process 912 for adjusting the temperature once in a fixing process step 911 shown in FIG. 9 described later.

Next, screen display in a case of receiving the selection of whether or not to enable the function of determining the printing order such that printing is performed in order from the paper discharge section with the low reference fixing temperature without changing the arrangement order of the paper discharged to each of the paper discharge sections will be described. Here, FIG. 5 is referred to.

FIG. 5 shows an example of the screen display in a case where the selection of whether or not to enable the function of determining the printing order that takes the fixing temperature into account is received.

FIG. 5 shows a screen displaying a sub-screen 502 including the check box 501 for receiving the input of the check for an item of "permit to change the output order for each discharge destination". For example, in step S401, the CPU 201 may receive the selection of the user by making the sub-screen 502 appear on the screen on the user interface 206 on which the user inputs the printing instruction.

Next, the information on the paper printed in the series of processes will be described. Here, FIG. 6 is referred to.

FIG. 6 shows the table 600 showing an example of the information on the paper printed in the series of processes. The table 600 shows the arrangement order of the printing data printed by the printing job by units of sheets, and shows information indicating the type of the paper used for each sheet and the paper discharge section as the discharge destination. Here, in order to distinguish the same page data printed in a plurality of copies, the description will be given as different sheets. More specifically, in the table 600, the sheets 1 to 10 for printing 5 pages × 2 copies of the document by one job, the type A or B of the paper used for printing each sheet, and the paper discharge section 121, 122, or 125 as the discharge destination are associated with each other. The sheets 1 to 5 are sheets for printing the first copy of the document, and sheets 5 to 10 are sheets for printing the second copy of the document.

Next, the paper discharged to each of the plurality of paper discharge sections will be described. Here, FIG. 7 is referred to.

FIG. 7 shows a table 700 showing an example of the paper discharged to each of the plurality of paper discharge sections.

The table 700 is information in which the information shown in the table 600 of FIG. 6 is classified for each discharge destination. In the table 700, all the paper discharged to the paper discharge section 121 is the paper A, all the paper discharged to the paper discharge section 122 is the paper B, and all the paper discharged to the paper discharge section 125 is the paper B. In such a case, in step S406, the CPU 201 may determine that the type of the paper discharged to each of the plurality of paper discharge sections is one type.

In addition, FIG. 7 shows the fixing temperature set for the type of the paper. The fixing temperature set for the paper A is 180°C, and the fixing temperature set for the paper B is 160°C. In such a case, in step S406, the CPU 201 may specify the reference fixing temperature of 180°C for the paper discharge section 121 and specify the reference fixing temperature of 160°C for each of the paper discharge sections 122 and 125.

Next, the printing order of the paper printed in the series of processes such that printing is performed in order from the paper discharge section with the low reference fixing temperature without changing the arrangement order of the paper discharged to each of the paper discharge sections will be described. Here, FIG. 8 is referred to.

FIG. 8 shows a table 800 showing an example of the printing order of the paper printed in the series of processes.

The table 800 shows the printing order in which the arrangement order of the printing data shown in the table 600 is not adopted as the printing order as it is and is changed to the printing order in which printing is performed in order from the paper discharge section with the low reference fixing temperature without changing the arrangement order of the paper discharged to each of the paper discharge sections.

In the table 800, the paper discharge sections are rearranged in order of the paper discharge section 122 and the paper discharge section 125 corresponding to the lowest reference fixing temperature of 160°C, and the paper discharge section 121 corresponding to the next lowest reference fixing temperature of 180°C, and the order of the sheets is also rearranged by units of the paper discharge sections. In a case where a plurality of paper discharge sections corresponding to the same reference fixing temperature are present, such as the paper discharge section 122 and the paper discharge section 125, the printing order may be determined such that one of the paper discharge sections is printed first.

In the table 800, the arrangement order of the paper discharged to each paper discharge section is not changed from the arrangement order shown in the table 600. Specifically, the arrangement order of the sheets 2, 3, 7, and 8 is maintained in the paper discharge section 122, the arrangement order of the sheets 4 and 9 is maintained in the paper discharge section 125, and the arrangement order of the sheets 1, 5, 6, and 10 is maintained in the paper discharge section 121. As a result, the arrangement order in which the sheets 1 to 10 are arranged in the table 600 is rearranged in the printing order of the sheets 2, 3, 7, 8, 4, 9, 1, 5, 6, and 10 in the table 800.

Next, the fixing process step in a case of performing printing in the printing order that takes the fixing temperature into account will be described. Here, FIG. 9 is referred to.

FIG. 9 shows an example of the fixing process step in a case where printing is performed in the printing order that takes the fixing temperature into account, together with a comparative example.

First, a fixing process step 901 in a case of performing printing in the original arrangement order, which is the comparative example shown in FIG. 9, is a fixing process step in a case of performing printing in the arrangement order of the sheets 1 to 10 shown in the table 600. As shown in the table 700, since the fixing temperature of the paper A is 180°C and the fixing temperature of the paper B is 160°C, in a case of the fixing process step 901, the image forming apparatus 120 executes the fixing process on the sheets 1 to 10 in a state where the types of the paper with different fixing temperatures are mixed.

Specifically, the temperature adjustment process 902 for lowering the temperature of the fixing unit is performed after the image forming apparatus 120 executes the fixing process on the sheet 1 at 180°C and before the image forming apparatus 120 executes the fixing process on the sheet 2 at 160°C. In addition, the temperature adjustment process 903 for raising the temperature of the fixing unit is performed after the image forming apparatus 120 executes the fixing process on the sheets 2 to 5 at 160°C and before the image forming apparatus 120 executes the fixing process on the sheet 6 at 180°C. In addition, the temperature adjustment process 904 for lowering the temperature of the fixing unit is performed after the image forming apparatus 120 executes the fixing process on the sheet 6 at 180°C and before the image forming apparatus 120 executes the fixing process on the sheet 7 at 160°C. In addition, the temperature adjustment process 905 for raising the temperature of the fixing unit is performed after the image forming apparatus 120 executes the fixing process on the sheets 7 to 9 at 160°C and before the image forming apparatus 120 executes the fixing process on the sheet 10 at 180°C.

Next, the fixing process step 911 in a case of performing printing in the printing order that takes the fixing temperature shown in FIG. 9 into account is the fixing process step in a case of performing printing in the printing order shown in the table 800. In a case of the fixing process step 911, the temperature adjustment process 912 for raising the temperature of the fixing unit is performed after the image forming apparatus 120 executes the fixing process on the sheets 2, 3, 7, 8, 4, and 9 at 160°C and before the image forming apparatus 120 executes the fixing process on the sheet 1 at 180°C. Since the fixing process is executed at 180°C for the remaining sheets 5, 6, and 10, the temperature adjustment process is not performed.

As described above, in a case of the fixing process step 901, four times of the temperature adjustment process are performed, and two times of the temperature adjustment process are the temperature adjustment process for lowering the temperature. On the other hand, in the fixing process step 911, the temperature adjustment process for raising the temperature is performed once.

While the temperature adjustment process is being executed, the image forming apparatus 120 waits for the execution of printing, and thus, for example, it is desired to reduce the number of times of the temperature adjustment process and suppress the waiting time in order to execute the printing process quickly. In particular, since it often takes longer time to lower the temperature of the fixing unit than to raise the temperature of the fixing unit, for example, it is desired to omit the process of lowering the temperature of the fixing unit and to raise the temperature of the fixing unit stepwise.

### [Second Exemplary Embodiment]

In the first exemplary embodiment, as one aspect of determining whether or not the variation among the fixing temperatures set for the paper discharged to the plurality of paper discharge sections is within the predetermined range, the process in a case where the CPU 201 functions as the specifying unit 302 to determine whether or not the type of the paper discharged to each of the paper discharge sections is one type has described. In the second exemplary embodiment, as another aspect, a process in a case where the CPU 201 functions as the specifying unit 302 to refer to the table that groups the types of the paper of which the fixing temperature difference is within the predetermined range and determine whether or not the types of the paper discharged to each of the paper discharge sections are only the types belonging to the same group will be described.

In a case where the fixing process can be executed at the same temperature, even in a case where the type of the paper is not necessarily one type, the arrangement order of the paper discharged to each of the paper discharge sections can be maintained, and the printing order that takes the fixing temperature into account can be adopted. In the second exemplary embodiment, the type of the paper on which the fixing process can be executed at the same temperature is determined with reference to the table.

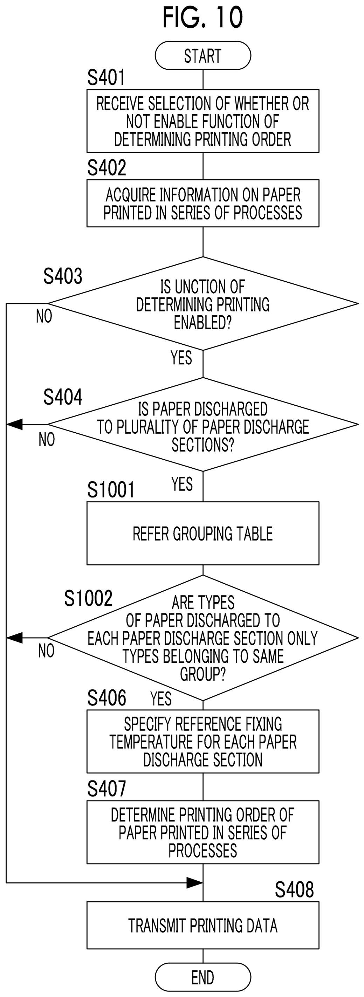

An example of a hardware configuration and a functional configuration of the information processing system 110 according to the second exemplary embodiment are identical to the hardware configuration and the functional configuration of the first exemplary embodiment, and thus the description thereof will be omitted. A flow of the information processing executed by the information processing system 110 according to the second exemplary embodiment will be described. Here, FIG. 10 is referred to.

FIG. 10 shows an example of the flow of the information processing executed by the information processing system 110 according to the second exemplary embodiment. The present flow is executed by the CPU 201 reading out the information processing program from the ROM 202 or the storage 204, loading the information processing program into the RAM 203, and executing the information processing program. The steps identical to the steps in the flow of FIG. 4 according to the first exemplary embodiment will be denoted by the reference numerals identical to the reference numerals in the flow of FIG. 4, only the steps different from the steps in the flow of FIG. 4 and the steps before and after the steps will be described, and the description of the other identical steps will be omitted.

The present flow is different from the flow of FIG. 4 in that steps S1001 and S1002 are included instead of step S405 shown in FIG. 4.

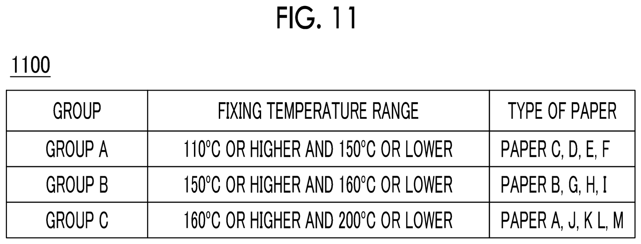

In step S1001, the CPU 201 functions as the specifying unit 302 to refer to a table that groups the types of the paper of which the fixing temperature difference is within the predetermined range. For example, a table such as a table 1100 shown in FIG. 11 described later may be referred to. A table that groups the types of the paper of which the fixing temperature difference is within the predetermined range may be stored in the storage 204 or the like and held in the information processing system 110.

Next, in step S1002, the CPU 201 functions as the specifying unit 302 to determine whether or not the types of the paper discharged to each of the paper discharge sections are only the types belonging to the same group. For example, a case where the paper discharged to a certain paper discharge section is only the paper C and D belonging to a group A shown in FIG. 11 described later corresponds to a case where the types of the paper discharged to the paper discharge section are only the types belonging to the same group. Determining whether or not the type of the paper discharged to each of the paper discharge sections are only the types belonging to the same group is one aspect of determining whether or not the variation among the fixing temperatures set for the paper discharged to each of the plurality of paper discharge sections is within the predetermined range.

In a case where it is determined that the types of the paper discharged to each of the paper discharge sections are only the types belonging to the same group, the CPU 201 advances the process to step S406. In this case, any value representative of the plurality of fixing temperatures may be specified as the reference fixing temperature specified in S406. As the representative value, a highest value, an average value, or a lowest value of the fixing temperatures corresponding to the type of the paper scheduled to be discharged to the paper discharge section may be set. In a case where it is determined that the types of the paper discharged to each of the paper discharge sections are not only the types belonging to the same group, the CPU 201 advances the process to step S408.

Next, the table that groups the types of the paper of which the fixing temperature difference is within the predetermined range will be described. Here, FIG. 11 is referred to.

FIG. 11 shows an example of the table that groups the types of the paper of which the fixing temperature difference is within the predetermined range.

FIG. 11 shows the table 1100 that divides the types A to M of the paper into three groups based on a range of the fixing temperature. In the table 1100, the paper C, the paper D, the paper E, and the paper F belong to the group A since the range of the fixing temperature difference is 110°C or higher and lower than 150°C. In addition, the paper B, the paper G, the paper H, and the paper I belong to a group B since the range of the fixing temperature difference is 150°C or higher and lower than 160°C. In addition, the paper A, the paper J, the paper K, the paper L, and the paper F belong to a group C since the range of the fixing temperature difference is 160°C or higher and lower than 200°C. For example, the group A may include paper such as a transparent film, the group B may include paper such as plain paper, and the group C may include paper such as thick paper.

### [Third Exemplary Embodiment]

In the first exemplary embodiment, as one aspect of determining whether or not the variation among the fixing temperatures set for the paper discharged to the plurality of paper discharge sections is within the predetermined range, the process in a case where the CPU 201 functions as the specifying unit 302 to determine whether or not the type of the paper discharged to each of the paper discharge sections is one type has described. In the second exemplary embodiment, as another aspect, the process in a case where the CPU 201 functions as the specifying unit 302 to refer to the table that groups the types of the paper of which the fixing temperature difference is within the predetermined range and determine whether or not the types of the paper discharged to each of the paper discharge sections are only the types belonging to the same group has been described.

In the third exemplary embodiment, as still another aspect, a process in a case where the predetermined range is set for each paper discharge section based on the fixing temperature of the type of the paper scheduled to be discharged first in the paper discharged to each of the paper discharge sections and whether or not the variation among the fixing temperatures is within the set range is determined will be described.

In a case where the fixing process can be executed at the same temperature, even in a case where the type of the paper is not necessarily one type, the arrangement order of the paper discharged to each of the paper discharge sections can be maintained, and the printing order that takes the fixing temperature into account can be adopted. In the third exemplary embodiment, a range of the variation among the fixing temperatures at which the fixing process can be executed at the same temperature is set using a range of the fixing temperature to which the fixing process is to be executed at the same temperature and a value that is a reference for the range, and it is determined whether or not the range of the variation among the fixing temperatures set in each paper discharge section is satisfied.

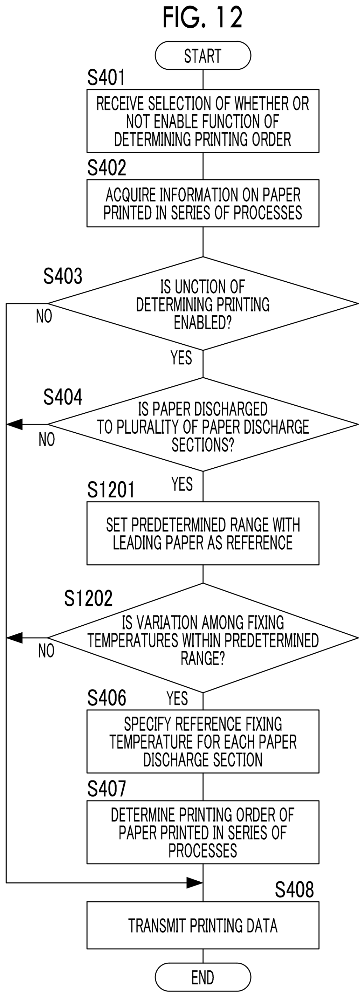

An example of a hardware configuration and a functional configuration of the information processing system 110 according to the third exemplary embodiment are identical to the hardware configuration and the functional configuration of the first exemplary embodiment, and thus the description thereof will be omitted. A flow of the information processing executed by the information processing system 110 according to the third exemplary embodiment will be described. Here, FIG. 12 is referred to.

FIG. 12 shows an example of the flow of the information processing executed by the information processing system 110 according to the third exemplary embodiment. The present flow is executed by the CPU 201 reading out the information processing program from the ROM 202 or the storage 204, loading the information processing program into the RAM 203, and executing the information processing program. The steps identical to the steps in the flow of FIG. 4 according to the first exemplary embodiment will be denoted by the reference numerals identical to the reference numerals in the flow of FIG. 4, only the steps different from the steps in the flow of FIG. 4 and the steps before and after the steps will be described, and the description of the other identical steps will be omitted.

The present flow is different from the flow of FIG. 4 in that steps S1201 and S1202 are included instead of step S405 shown in FIG. 4.

In step S1201, the CPU 201 functions as the specifying unit 302 to set the predetermined range using the fixing temperature of the paper that is discharged first in the paper discharged to each of the paper discharge sections as the median value. The paper that is discharged first in the paper discharged to each of the paper discharge sections is, for example, the paper A used for printing the sheet 1 arranged first in the paper discharge section 121 shown in FIG. 7, the paper B used for printing the sheet 2 arranged first in the paper discharge section 122, and the paper B used for printing the sheet 8 arranged first in the paper discharge section 125. A range in which the fixing temperature of the paper scheduled to be discharged first is the median value of the predetermined fixing temperature range may be set as the predetermined range. For example, in a case where a range of ±10°C is a predetermined range and the fixing temperature 180°C of the paper A at the leading end of the paper discharge section 121 is set as the median value, a range of 170°C or higher and 190°C or lower may be set as the predetermined range for the paper discharge section 121.

Next, in step S1202, the CPU 201 functions as the specifying unit 302 to determine whether or not the variation among the fixing temperatures set for the paper discharged to each of the plurality of paper discharge sections is within the predetermined range that is set.

For example, in a case where a range of ±10°C is a predetermined range, since all the paper discharged to the paper discharge sections 121 shown in FIG. 7 is the paper A, the fixing temperature of the paper A, which is 180°C, is within a range of 170°C or higher and 190°C or lower. In a case where the paper discharged to the paper discharge section 121 is the paper A with the fixing temperature of 180°C, the paper C with the fixing temperature of 120°C, and the paper with the fixing temperature of 190°C, the variation among the fixing temperatures of 120°C to 190°C is outside a range of 170°C or higher and 190°C or lower. In a case where even one such paper discharge section is present, in step S1202, the CPU 201 determines that the variation among the fixing temperatures set for the paper discharged to each of the plurality of paper discharge sections is not within the predetermined range that is set.

In a case where it is determined that the variation among the fixing temperatures set for the paper discharged to each of the plurality of paper discharge sections is within the predetermined range that is set, the CPU 201 advances the process to step S406. In this case, as the reference fixing temperature specified in S406, the fixing temperature of the paper that is discharged first in the paper discharged to each of the paper discharge sections may be specified. In a case where it is determined that the variation among the fixing temperatures set for the paper discharged to each of the plurality of paper discharge sections is not within the predetermined range that is set, the CPU 201 advances the process to step S408.

### [Fourth Exemplary Embodiment]

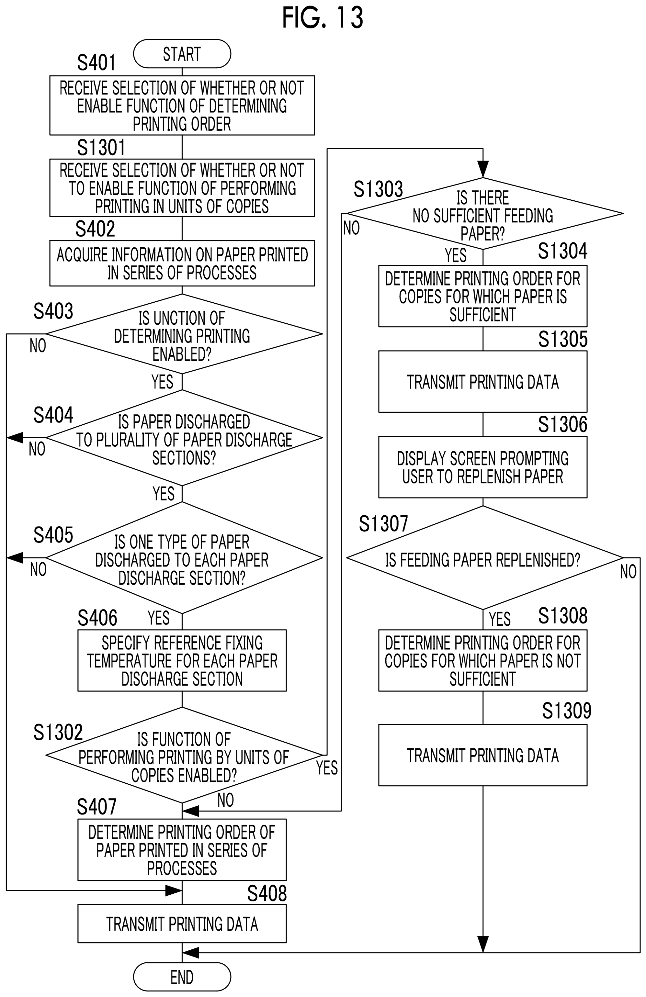

In the fourth exemplary embodiment, a process in a case where a plurality of copies of the document are included in the paper printed in the series of processes and the feeding paper is not sufficient to print all of the plurality of copies of the document will be described. Since an example of a hardware configuration of the information processing system according to the fourth exemplary embodiment is identical to the hardware configuration of the first exemplary embodiment, the description thereof will be omitted. Although not shown, a functional configuration of the information processing system 110 according to the fourth exemplary embodiment has the same functional configuration as the information processing system 110 according to the exemplary embodiment of FIG. 1, and further includes a display unit 305. A flow of the information processing executed by the information processing system 110 according to the fourth exemplary embodiment will be described. Here, FIG. 13 is referred to.

FIG. 13 shows an example of the flow of the information processing executed by the information processing system 110 according to the fourth exemplary embodiment. The present flow is executed by the CPU 201 reading out the information processing program from the ROM 202 or the storage 204, loading the information processing program into the RAM 203, and executing the information processing program. The steps identical to the steps in the flow of FIG. 4 according to the first exemplary embodiment will be denoted by the reference numerals identical to the reference numerals in the flow of FIG. 4, only the steps different from the steps in the flow of FIG. 4 and the steps before and after the steps will be described, and the description of the other identical steps will be omitted.

The present flow is different from the flow of FIG. 4 in that step S1301 is included between steps S401 and S402 shown in FIG. 4, step S1302 is included between steps S406 and S407 shown in FIG. 4, and steps S1303 to S1309 are further included in addition to the steps shown in FIG. 4.

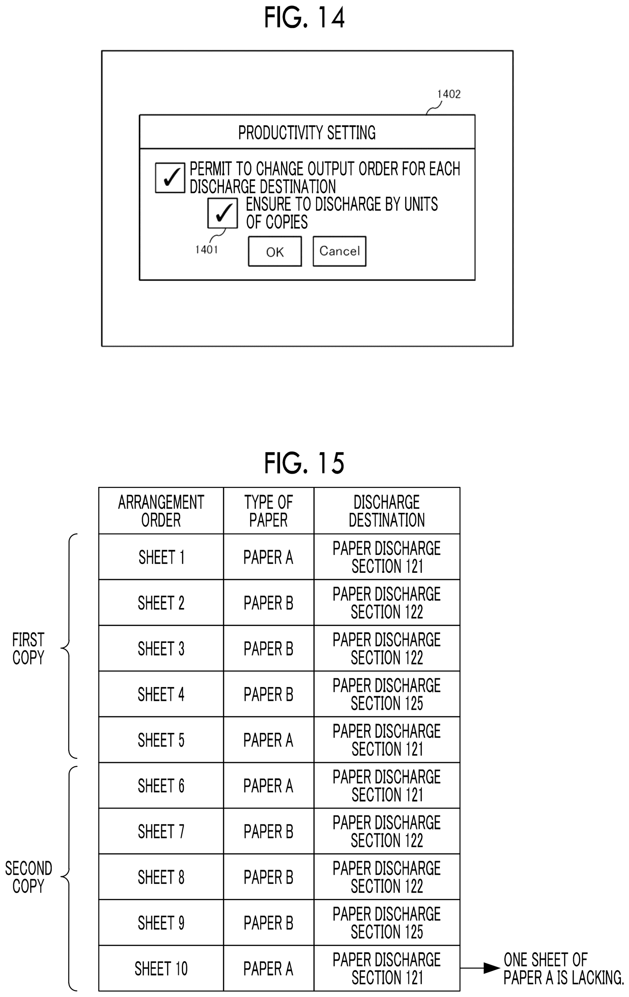

In step S1301, the CPU 201 functions as the reception unit 304 to receive the selection of whether or not to enable the function of determining the printing order such that, in a case where the feeding paper is not sufficient to print all the plurality of copies of the document, only the paper for copies for which the feeding paper is sufficient among the plurality of copies is printed. For example, the selection of the user may be accepted by checking a check box 1401 shown in FIG. 14 described later.

The function is a function of ensuring that the paper is discharged by units of copies. Even in a case of the printed materials discharged to the plurality of paper discharge sections, for example, it may be desired to provide the printed material to the user by units of common copies. For example, a case will be considered where there is a user who delivers 10 copies of the printed material discharged to the three paper discharge sections to a customer. In a case where, due to the insufficient feeding paper, the printed materials with an incomplete number of pages, such as up to the fifth copy, are provided in the two paper discharge sections and the printed materials up to the tenth copy are provided in the remaining one paper discharge section, the user has to manually exclude the printed material that is not included in the five copies in order to prepare the partial delivery of the printed material by assembling the printed materials for five copies, which is the number of copies printed in common in the paper discharge sections. In order to avoid such inconvenience, the user may want to ensure that the paper is discharged by units of copies in advance. Therefore, receiving the selection of whether or not to enable the above-described function improves the user convenience.

In step S1302, the CPU 201 functions as the determination unit 303 to determine whether or not the above-described function of determining the printing order such that only the paper for copies for which the feeding paper is sufficient among the plurality of copies is printed in a case where the feeding paper is not sufficient to print all of the plurality of copies of the document is enabled.

In a case where it is determined that the above-described function is enabled, the CPU 201 advances the process to step S1303. In a case where it is determined that the above-described function is not enabled, the CPU 201 advances the process to step S407.

In step S1303, the CPU 201 functions as the determination unit 303 to determine whether or not the feeding paper is not sufficient to print all the plurality of copies of the document. For example, the CPU 201 may receive information on the remaining amount of the feeding paper in the image forming apparatus 120 from the image forming apparatus 120 and compare the quantity of paper required for printing with the remaining amount of the feeding paper. For example, FIG. 15, which will be described later, shows a state where four sheets of paper A are required to print all of the sheets 1 to 10 for two copies, and one sheet is lacking.

In a case where it is determined that the feeding paper is not sufficient to print all the plurality of copies of the document, the CPU 201 advances the process to step S1304. In a case where it is not determined that the feeding paper is not sufficient in order to print all the plurality of copies of the document, the CPU 201 advances the process to step S407.

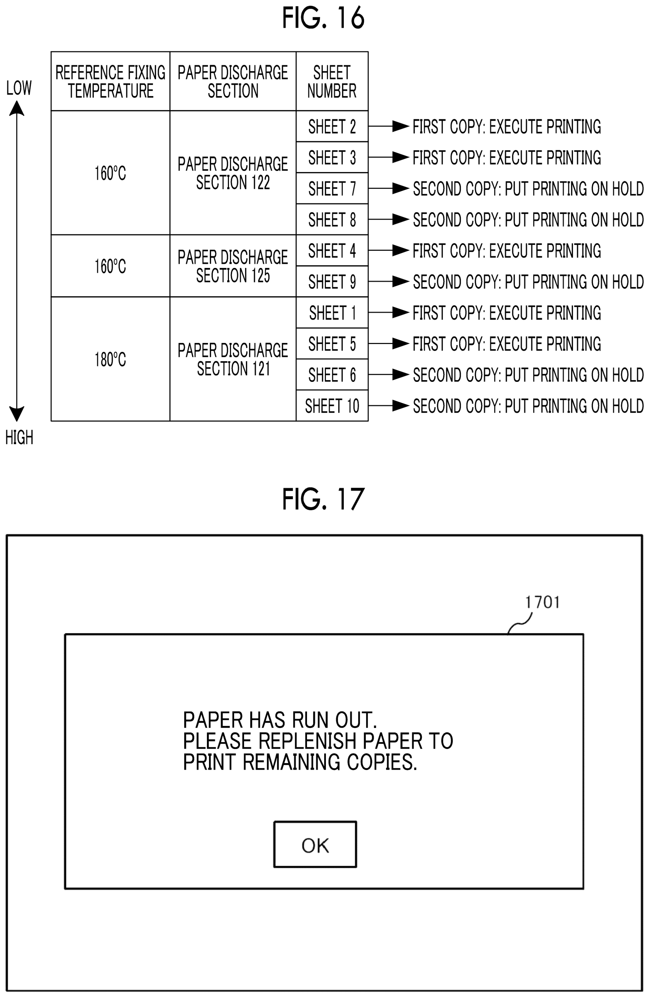

In step S1304, the CPU 201 functions as the determination unit 303 to determine the printing order such that only the paper for copies for which the feeding paper is sufficient among the plurality of copies is printed. The concept of determining the printing order in this way includes a concept that the printing order of the paper printed in the series of processes is rearranged such that printing is performed in order from the paper discharge section with the low reference fixing temperature without changing the arrangement order of the paper discharged to each of the paper discharge sections, and then the printing order is set such that printing of the printing data of the paper for copies for which the feeding paper is not sufficient is put on hold. For example, as shown in FIG. 16 to be described later, the CPU 201 determines the printing order such that printing of the first copy of paper, which is the copy for which the feeding paper is sufficient, is executed.

In step S1305, the CPU 201 functions as the determination unit 303 to transmit the printing data to the image forming apparatus 120. The CPU 201 may sequentially transmit the printing data of the paper for copies for which the feeding paper is sufficient among the plurality of copies to the image forming apparatus 120 based on the determined printing order. For example, the CPU 201 may sequentially transmit the printing data of the sheets 2, 3, 4, 1, and 5 to the image forming apparatus 120, as shown in FIG. 16 described later. Based on the printing data transmitted in this manner, the image forming apparatus 120 can execute the printing process of the paper for the common copies in each of the paper discharge sections in ascending order of the fixing temperature without changing the arrangement order.

In step S1306, the CPU 201 functions as the display unit 305 to display the screen prompting the user to replenish the feeding paper. For example, the CPU 201 may display a screen including a sub-screen 1701 as shown in FIG. 17, which will be described later, on the user interface 206.

In step S1307, the CPU 201 functions as the determination unit 303 to determine whether or not the feeding paper is replenished.

In a case where it is determined that the feeding paper is replenished, the CPU 201 advances the process to step S1308. In a case where it is determined that the feeding paper is not replenished, the CPU 201 ends the process.

In step S1308, the CPU 201 functions as the determination unit 303 to determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections. The concept of determining the printing order in this way includes a concept that the printing order of the paper printed in the series of processes is rearranged such that printing is performed in order from the paper discharge section with the low reference fixing temperature without changing the arrangement order of the paper discharged to each of the paper discharge sections, and then the printing order is set such that printing of the printing data of the paper for copies for which the feeding paper is not sufficient, which has been put on hold, is executed. For example, the CPU 201 determines the printing order such that printing of the paper of the second copy put on hold is executed as shown in FIG. 16 which will be described later.

In step S1309, the CPU 201 functions as the determination unit 303 to transmit the printing data to the image forming apparatus 120. Based on the printing data transmitted in this manner, the image forming apparatus 120 can execute the printing process of the remaining paper for the common copies in each of the paper discharge sections in ascending order of the fixing temperature without changing the arrangement order.

Next, screen display in a case of receiving selection of whether or not to enable a function of determining the printing order such that, in a case where feeding paper is not sufficient to print all a plurality of copies of a document, only the paper for copies for which the feeding paper is sufficient among the plurality of copies is printed will be described. Here, FIG. 14 is referred to.

FIG. 14 shows an example of the screen display in a case of receiving the selection of whether or not to enable the function of determining the printing order such that, in a case where the feeding paper is not sufficient to print all the plurality of copies of the document, only the paper for copies for which the feeding paper is sufficient among the plurality of copies is printed.

FIG. 14 shows a screen displaying a sub-screen 1402 including the check box 1401 for receiving an input of a check for the item of "ensure discharge by units of copies". As shown in FIG. 14, it is assumed that a check is input for the item "permit to change the output order for each discharge destination", a check may be input to the check box 1401. In step S1301, the CPU 201 may receive the selection of the user by making the sub-screen 1402 appear on the screen on the user interface 206 on which the user inputs the printing instruction.

Next, a case will be described where the series of processes includes printing of a plurality of sheets of paper for the plurality of copies of the document, and the feeding paper is not sufficient to print all of the plurality of copies of the document. Here, FIG. 15 is referred to.

FIG. 15 shows an example of a case where the series of processes includes printing of a plurality of sheets of paper for the plurality of copies of the document, and the feeding paper is not sufficient to print all of the plurality of copies of the document.

FIG. 15 shows that the printing job shown in the table 600 includes printing of the first copy of the sheets 1 to 5 and printing of the second copy of the sheets 6 to 10, and that one sheet of the paper A is lacking to print all of the second copy of the sheets 6 to 10.

Next, the printing order determined for the paper for copies for which the feeding paper is sufficient and the paper for copies that cannot be printed due to the insufficient feeding paper and will be described. Here, FIG. 16 is referred to.

FIG. 16 shows an example of the printing order determined for the paper for copies for which the feeding paper is sufficient and the paper for copies not printable due to the insufficient feeding paper.

FIG. 16 shows the printing order determined such that among the printing orders rearranged as shown in the table 800, printing of the sheets 2, 3, 4, 1, and 5 of the first copy for which the feeding paper is sufficient is executed without waiting for replenishment of the feeding paper and printing of the sheets 7, 8, 9, 6, and 10 of the second copy for which the feeding paper is not sufficient is put on hold until the feeding paper is replenished.

Next, screen display for prompting the user to replenish the feeding paper will be described. Here, FIG. 17 is referred to.

FIG. 17 shows an example of screen display prompting the user to replenish the feeding paper. FIG. 17 shows a screen including a sub-screen 1701 on which "Paper has run out. Please replenish paper to print remaining copies." is described.

Although the exemplary embodiments that can be carried out have been described so far, the above-described exemplary embodiments can also be modified into various forms or applied to various uses.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program of the present application may also be provided as a program product.

### (Supplementary Note)

(((1))) An information processing system comprising:
   a processor configured to:
   acquire information on paper printed in a series of processes;
   specify a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and
   determine a printing order of the paper printed in the series of processes such that the paper is printed in order from a paper discharge section with a lowest reference fixing temperature without changing an arrangement order of the paper discharged to each of the paper discharge sections.
(((2))) The information processing system according to (((1))), wherein the processor is configured to:
   in a case where a type of the paper discharged to each of the paper discharge sections is one type as a case where the variation among the fixing temperatures is within the predetermined range, specify the reference fixing temperature.
(((3))) The information processing system according to (((1))), wherein the processor is configured to:
   refer to a table that groups types of the paper of which a fixing temperature difference is within a predetermined range and specify the reference fixing temperature in a case where the types of the paper discharged to each of the paper discharge sections are only the types belonging to the same group as a case where the variation among the fixing temperatures is within the predetermined range.
(((4))) The information processing system according to (((1))), wherein the processor is configured to:
   set the predetermined range using a fixing temperature of the paper that is discharged first in the paper discharged to each of the paper discharge sections as a median value.
(((5))) The information processing system according to any one of (((1))) to (((4))),
   wherein the series of processes includes printing of a plurality of sheets of paper for a plurality of copies of a document, and
   the processor is configured to:
      in a case where there is no sufficient feeding paper to print all of the plurality of copies of the document, determine the printing order such that only the paper for copies for which the feeding paper is sufficient among the plurality of copies is printed.
(((6))) The information processing system according to (((5))), wherein the processor is configured to:
   in a case where there are copies for which the feeding paper is not sufficient among the plurality of copies, display a screen prompting a user to replenish the feeding paper.
(((7))) The information processing system according to (((6))), wherein the processor is configured to:
   in a case where the feeding paper is replenished and printing is resumed, determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections.
(((8))) The information processing system according to any one of (((1))) to (((7))), wherein the processor is configured to:
   receive selection of whether or not to enable a function of determining the printing order such that printing is performed in order from the paper discharge section with the lowest reference fixing temperature without changing the arrangement order of the paper discharged to each of the paper discharge sections.
(((9))) The information processing system according to (((5))), wherein the processor is further configured to:
   in a case where the feeding paper is not sufficient to print all of the plurality of copies of the document, receive selection of whether or not to enable a function of determining the printing order such that only the paper for the copies for which the feeding paper is sufficient among the plurality of copies is printed.
(((10))) An information processing program causing a computer to execute a process comprising:
   acquiring information on paper printed in a series of processes;
   specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and
   determining a printing order of the paper printed in the series of processes such that the paper is printed in order from a paper discharge section with a lowest reference fixing temperature without changing an arrangement order of the paper discharged to each of the paper discharge sections.

With the information processing system according to (((1))) or the information processing program according to (((10))), the decrease in the user convenience that occurs in a case where the printing order that takes the fixing temperature into account is adopted may be prevented, as compared to a case where the paper is printed in ascending order of the fixing temperature without any particular restrictions.

With the information processing system according to (((2))), the printing order that takes the fixing temperature into account may be determined without changing the arrangement order of the same type of the paper that is discharged to each of the paper discharge sections and on which the fixing process is executable at the same temperature.

With the information processing system according to (((3))), the printing order that takes the fixing temperature into account may be determined without changing the arrangement order of the type of the paper that is discharged to each of the paper discharge sections and on which the fixing process is executable at the same temperature.

With the information processing system according to (((4))), the printing order that takes the fixing temperature into account may be determined without changing the arrangement order of the paper that is discharged to each of the paper discharge sections and on which the fixing process is executable at the same temperature as the temperature of the paper discharged first.

With the information processing system according to (((5))), in a case where the feeding paper is not sufficient, the printing order that takes the fixing temperature into account and in which the paper for the same copies is discharged in each of the plurality of paper discharge sections may be determined.

With the information processing system according to (((6))), the replenishment of the feeding paper for enabling printing of the paper for the same copies as the copies not printable in each of the plurality of paper discharge sections may be prompted.

With the information processing system according to (((7))), in a case of printing the paper for the same copies as the copies not printable in each of the plurality of paper discharge sections, the printing order that takes the fixing temperature into account may be determined without changing the arrangement order of the paper discharged to each of the paper discharge sections.

With the information processing system according to (((8))), the decrease in the user convenience may be prevented as compared to a case where the selection of whether or not to enable a function of changing the printing order is not received.

With the information processing system according to (((9))), the user convenience may be improved as compared to a case where the selection of whether or not to enable a function of ensuring that the paper is discharged by units of copies is not received.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

110: information processing system
120: image forming apparatus
201: CPU
301: acquisition unit
302: specifying unit
303: determination unit
304: reception unit
305: display unit

## Claims

1. An information processing system comprising:
a processor configured to:
acquire information on paper printed in a series of processes;
specify a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and
determine a printing order of the paper printed in the series of processes such that the paper is printed in order from a paper discharge section with a lowest reference fixing temperature without changing an arrangement order of the paper discharged to each of the paper discharge sections.

2. The information processing system according to claim 1, wherein the processor is configured to:
in a case where a type of the paper discharged to each of the paper discharge sections is one type as a case where the variation among the fixing temperatures is within the predetermined range, specify the reference fixing temperature.

3. The information processing system according to claim 1, wherein the processor is configured to:
refer to a table that groups types of the paper of which a fixing temperature difference is within a predetermined range and specify the reference fixing temperature in a case where the types of the paper discharged to each of the paper discharge sections are only the types belonging to the same group as a case where the variation among the fixing temperatures is within the predetermined range.

4. The information processing system according to claim 1, wherein the processor is configured to:
set the predetermined range using a fixing temperature of the paper that is discharged first in the paper discharged to each of the paper discharge sections as a median value.

5. The information processing system according to any one of claims 1 to 4,
wherein the series of processes includes printing of a plurality of sheets of paper for a plurality of copies of a document, and
the processor is configured to:
in a case where there is no sufficient feeding paper to print all of the plurality of copies of the document, determine the printing order such that only the paper for copies for which the feeding paper is sufficient among the plurality of copies is printed.

6. The information processing system according to claim 5, wherein the processor is configured to:
in a case where there are copies for which the feeding paper is not sufficient among the plurality of copies, display a screen prompting a user to replenish the feeding paper.

7. The information processing system according to claim 6, wherein the processor is configured to:
in a case where the feeding paper is replenished and printing is resumed, determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections.

8. The information processing system according to any one of claims 1 to 7, wherein the processor is configured to:
receive selection of whether or not to enable a function of determining the printing order such that printing is performed in order from the paper discharge section with the lowest reference fixing temperature without changing the arrangement order of the paper discharged to each of the paper discharge sections.

9. The information processing system according to claim 5, wherein the processor is further configured to:
in a case where the feeding paper is not sufficient to print all of the plurality of copies of the document, receive selection of whether or not to enable a function of determining the printing order such that only the paper for the copies for which the feeding paper is sufficient among the plurality of copies is printed.

10. An information processing program causing a computer to execute a process comprising:
acquiring information on paper printed in a series of processes;
specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and
determining a printing order of the paper printed in the series of processes such that the paper is printed in order from a paper discharge section with a lowest reference fixing temperature without changing an arrangement order of the paper discharged to each of the paper discharge sections.

11. An information processing method comprising:
acquiring information on paper printed in a series of processes;
specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range; and
determining a printing order of the paper printed in the series of processes such that the paper is printed in order from a paper discharge section with a lowest reference fixing temperature without changing an arrangement order of the paper discharged to each of the paper discharge sections.

## Amended claims

### Amended claims in accordance with Rule 137(2) EPC.

**1.** An information processing system (110) comprising:
a processor configured to:
acquire information on paper printed in a series of processes;
specify a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range;
**characterized in that** the processor is configured to:
refer to a table that groups types of the paper of which a fixing temperature difference is within a predetermined range and specify the reference fixing temperature for a paper discharge section among the plurality of paper discharge sections in a case where the variation among the fixing temperatures in the paper discharge section is within the predetermined range; and
determine a printing order of the paper printed in the series of processes such that the paper is printed in order from a paper discharge section by using the specified reference fixing temperature with a lowest reference fixing temperature without changing an arrangement order of the paper discharged to each of the paper discharge sections.

**2.** The information processing system (110) according to claim 1, wherein the processor is configured to:
in a case where a type of the paper discharged to each of the paper discharge sections is one type as a case where the variation among the fixing temperatures is within the predetermined range, specify the reference fixing temperature.

**3.** The information processing system (110) according to claim 1, wherein the processor is configured to:
set the predetermined range using a fixing temperature of the paper that is discharged first in the paper discharged to each of the paper discharge sections as a median value.

**4.** The information processing system (110) according to any one of claims 1 to 3,
wherein the series of processes includes printing of a plurality of sheets of paper for a plurality of copies of a document, and
the processor is configured to:
in a case where there is no sufficient feeding paper to print all of the plurality of copies of the document, determine the printing order such that only the paper for copies for which the feeding paper is sufficient among the plurality of copies is printed.

**5.** The information processing system (110) according to claim 4, wherein the processor is configured to:
in a case where there are copies for which the feeding paper is not sufficient among the plurality of copies, display a screen prompting a user to replenish the feeding paper.

**6.** The information processing system (110) according to claim 5, wherein the processor is configured to:
in a case where the feeding paper is replenished and printing is resumed, determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections.

**7.** The information processing system (110) according to any one of claims 1 to 6, wherein the processor is configured to:
receive selection of whether or not to enable a function of determining the printing order such that printing is performed in order from the paper discharge section with the lowest reference fixing temperature without changing the arrangement order of the paper discharged to each of the paper discharge sections.

**8.** The information processing system (110) according to claim 4, wherein the processor is further configured to:
in a case where the feeding paper is not sufficient to print all of the plurality of copies of the document, receive selection of whether or not to enable a function of determining the printing order such that only the paper for the copies for which the feeding paper is sufficient among the plurality of copies is printed.

**9.** An information processing program causing a computer to execute a process comprising:
acquiring information on paper printed in a series of processes;
specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range;
**characterized by** comprising:
referring to a table that groups types of the paper of which a fixing temperature difference is within a predetermined range and specify the reference fixing temperature for a paper discharge section among the plurality of paper discharge sections in a case where the variation among the fixing temperatures in the paper discharge section is within the predetermined range; and
determining a printing order of the paper printed in the series of processes such that the paper is printed in order from a paper discharge section by using the specified reference fixing temperature with a lowest reference fixing temperature without changing an arrangement order of the paper discharged to each of the paper discharge sections.

**10.** An information processing method comprising:
acquiring information on paper printed in a series of processes;
specifying a reference fixing temperature for each of a plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within a predetermined range;
**characterized by** comprising:
referring to a table that groups types of the paper of which a fixing temperature difference is within a predetermined range and specify the reference fixing temperature for a paper discharge section among the plurality of paper discharge sections in a case where the variation among the fixing temperatures in the paper discharge section is within the predetermined range; and
determining a printing order of the paper printed in the series of processes such that the paper is printed in order from a paper discharge section by using the specified reference fixing temperature with a lowest reference fixing temperature without changing an arrangement order of the paper discharged to each of the paper discharge sections.

**1.** An information processing system (110) comprising:
a processor configured to:
acquire information on paper printed in a series of processes;
**characterized in that** the processor is configured to:
set a predetermined range using a fixing temperature of the paper that is discharged first in the paper discharged to each of a plurality of paper discharge sections as a median value;
specify a reference fixing temperature for each of the plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within the predetermined range; and
determine a printing order of the paper printed in the series of processes such that the paper is printed in order from a paper discharge section with a lowest reference fixing temperature without changing an arrangement order of the paper discharged to each of the paper discharge sections.

**2.** The information processing system (110) according to claim 1, wherein the processor is configured to:
in a case where a type of the paper discharged to each of the paper discharge sections is one type as a case where the variation among the fixing temperatures is within the predetermined range, specify the reference fixing temperature.

**3.** The information processing system (110) according to claim 1, wherein the processor is configured to:
refer to a table that groups types of the paper of which a fixing temperature difference is within a predetermined range and specify the reference fixing temperature in a case where the types of the paper discharged to each of the paper discharge sections are only the types belonging to the same group as a case where the variation among the fixing temperatures is within the predetermined range.

**4.** The information processing system (110) according to any one of claims 1 to 3,
wherein the series of processes includes printing of a plurality of sheets of paper for a plurality of copies of a document, and
the processor is configured to:
in a case where there is no sufficient feeding paper to print all of the plurality of copies of the document, determine the printing order such that only the paper for copies for which the feeding paper is sufficient among the plurality of copies is printed.

**5.** The information processing system (110) according to claim 4, wherein the processor is configured to:
in a case where there are copies for which the feeding paper is not sufficient among the plurality of copies, display a screen prompting a user to replenish the feeding paper.

**6.** The information processing system (110) according to claim 5, wherein the processor is configured to:
in a case where the feeding paper is replenished and printing is resumed, determine the printing order for the paper for remaining copies that are not printable due to insufficient feeding paper among the plurality of copies such that printing is performed in order from the paper discharge section with the lowest reference fixing temperature without changing the arrangement order of the paper discharged to each of the paper discharge sections.

**7.** The information processing system (110) according to any one of claims 1 to 6, wherein the processor is configured to:
receive selection of whether or not to enable a function of determining the printing order such that printing is performed in order from the paper discharge section with the lowest reference fixing temperature without changing the arrangement order of the paper discharged to each of the paper discharge sections.

**8.** The information processing system (110) according to claim 4, wherein the processor is further configured to:
in a case where the feeding paper is not sufficient to print all of the plurality of copies of the document, receive selection of whether or not to enable a function of determining the printing order such that only the paper for the copies for which the feeding paper is sufficient among the plurality of copies is printed.

**9.** An information processing program causing a computer to execute a process comprising:
acquiring information on paper printed in a series of processes;
**characterized by** comprising:
setting a predetermined range using a fixing temperature of the paper that is discharged first in the paper discharged to each of a plurality of paper discharge sections as a median value;
specifying a reference fixing temperature for each of the plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within the predetermined range; and
determining a printing order of the paper printed in the series of processes such that the paper is printed in order from a paper discharge section with a lowest reference fixing temperature without changing an arrangement order of the paper discharged to each of the paper discharge sections.

**10.** An information processing method comprising:
acquiring information on paper printed in a series of processes;
**characterized by** comprising:
setting a predetermined range using a fixing temperature of the paper that is discharged first in the paper discharged to each of a plurality of paper discharge sections as a median value;
specifying a reference fixing temperature for each of the plurality of paper discharge sections in a case where the paper printed in the series of processes is discharged to the plurality of paper discharge sections and a variation among fixing temperatures set for the paper discharged to each of the plurality of paper discharge sections as fixing temperatures for fixing an image to the paper is within the predetermined range; and
determining a printing order of the paper printed in the series of processes such that the paper is printed in order from a paper discharge section with a lowest reference fixing temperature without changing an arrangement order of the paper discharged to each of the paper discharge sections.
